# EUROPEAN PATENT SPECIFICATION

(11) **EP 1 859 980 B1**
(45) Date of publication and mention of the grant of the patent: **16.12.2009**
(21) Application number: 07108700.1
(22) Date of filing: 22.05.2007
(51) Int. Cl.: B60J 7/043

(54) **Motor vehicle roof provided with a sunroof panel**
Mit einer Sonnendachverkleidung ausgerüstetes Fahrzeugdach
Toit de véhicule à moteur doté d'un panneau de toit ouvrant

(30) Priority: 23.05.2006 IT TO20060374
(43) Date of publication of application: 28.11.2007
(73) Proprietor: FIAT AUTO S.p.A., 10135 Torino (IT)
(72) Inventor: Tosco, Franco c/o FIAT AUTO S.p.A., 10135 Torino (IT); Gobetto, Enrico c/o FIAT AUTO S.p.A., 10135 Torino (IT); Monaco, Marco c/o FIAT AUTO S.p.A., 10135 Torino (IT)
(74) Representative: Jorio, Paolo

(56) References cited:
- EP-A- 1 403 113
- EP-A1- 1 223 065
- EP-A1- 1 247 673
- WO-A-98/14342
- DE-A1- 19 634 324
- DE-C1- 4 238 944
- DE-C1- 19 713 347
- DE-C1- 19 713 348
- DE-U1-202004 006 391

## Description

The present invention relates to a motor vehicle roof provided with a panel which can be opened or "sunroof panel". Such a roof is generally known.

Sunroof panels for vehicles comprise a frame which is fixed to the remainder of the body of the motor vehicle, on which the frame itself is mounted, and has an opening which may be opened/closed by displacing a transparent panel.

In particular, this transparent panel is movable between an advanced position, where it is lowered and closes the opening of the frame, and a retracted position, where it is raised and leaves open the opening of the frame and is arranged above another panel mounted in a fixed position on the said frame.

The range of vision which the passengers and the driver have from inside the passenger compartment through the upper opening is determined essentially by the dimensions of the frame which supports the transparent panel.

In order to increase this range of vision as far as possible, there therefore exists the need for a roof in which the dimensions of its frame are relatively small.

In particular, there exists a need to limit the dimensions of the frame in the direction perpendicular to the longitudinal axis of forward movement of the motor vehicle.

There is also the need to have a simple system for joining together the transparent panel and the frame and for rendering the said panel movable between its advanced and retracted positions.

The object of the present invention is to provide a motor vehicle roof provided with a sunroof panel, which is able to solve the above-mentioned requirements in a simple and low-cost manner.

According to the present invention a motor vehicle roof is provided, the roof comprising:
- a frame able to be joined in a fixed position to a body of the motor vehicle and defining at least one opening;
- a light-permeable panel;
- means for joining the said panel to the said frame so as to allow the said panel to move longitudinally between an advanced position, where it is lowered and closes said opening, and a retracted position, where it is raised and leaves said opening open; said joining means comprising:
   a) a pair of front guides on the right and a pair of front guides on the left of the said opening; each pair of front guides being mounted on the said frame and consisting of an associated first guide and an associated second guide;
   b) two front levers hinged with the said panel about respective first horizontal axes; said front levers comprising:
      (1) respective first portions guided by the said first guides and rotatable with respect to the said first guides about respective second axes parallel to the said first axes;
      (2) respective second portions guided by the second guides and rotatable with respect to the said second guides about respective third axes parallel to the said first and second axes;
         said second guides being shaped with a profile such as to raise/lower the said third axes with respect to the said second axes and, therefore, rotate the said front levers when the said panel is near to the said advanced position;
- sealing means mounted on the said frame around the said opening and co-operating with the said panel so as to ensure fluid-tightness when the said panel is arranged in its advanced position and comprising two longitudinal sealing sections arranged on opposite sides of the said opening and mounted on, and arranged above, said first guides or said second guides.

The present invention also relates to a motor vehicle comprising a body and a roof comprising:
- a frame joined in a fixed position to said body and defining at least one opening;
- a light-permeable panel;
- means for joining the said panel to the said frame so as to allow the said panel to move longitudinally between an advanced position, where it is lowered and closes said opening, and a retracted position, where it is raised and leaves said opening open; said joining means comprising:
   a) a pair of front guides on the right and a pair of front guides on the left of the said opening; each pair of front guides being mounted on the said frame and consisting of an associated first guide and an associated second guide;
   b) two front levers hinged with the said panel about respective first horizontal axes; said front levers comprising:
      (1) respective first portions guided by the said first guides and rotatable with respect to the said first guides about respective second axes parallel to the said first axes;
      (2) respective second portions guided by the said second guides and rotatable with respect to the said second guides about respective third axes parallel to the said first and second axes;
         said second guides being shaped with a profile such as to raise/lower the said third axes with respect to the said second axes and, therefore, rotate the said front levers when the said panel is near to the said advanced position;
- sealing means mounted on the said frame around the said opening and co-operating with the said panel so as to ensure fluid-tightness when the said panel is arranged in its advanced position and comprising two longitudinal sealing sections arranged on opposite sides of the said opening and mounted on, and arranged above, said first guides or said second guides.

In particular, the said frame is fixed directly to the said body.

The invention will now be illustrated with reference to the accompanying drawings which illustrate a nonlimiting example of embodiment thereof, in which:
- Figure 1 is a plan view and shows, schematically and with parts removed for the sake of clarity, a preferred embodiment of the roof of a motor vehicle provided with a sunroof panel according to the present invention;
- Figure 2 is a schematic view, on a larger scale, of the roof according to Figure 1, with the panel closed and along a cross-section taken along the line II-II of Figure 1;
- Figure 3 shows a perspective view, on a larger scale, of a detail of Figure 1, with the sunroof panel arranged in an intermediate position during an opening/closing movement;
- Figure 4 is a schematic view, on a larger scale, of the roof according to Figure 1, with the panel open and along a cross-section taken along the line IV-IV of Figure 1;
- Figure 5 shows a perspective view, on a larger scale, of a further detail of Figure 1, with the sunroof panel arranged in an intermediate position during an opening/closing movement.

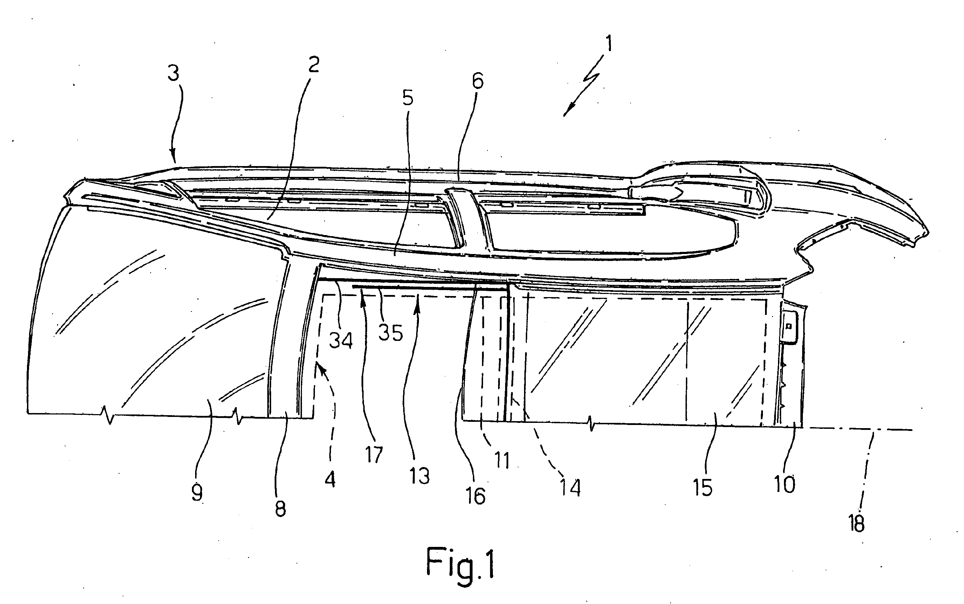

In Figure 1, 1 denotes in its entirety, a roof (partially and schematically shown) which is fixed in a fluid-tight manner to a body 2 of a motor vehicle 3 (partially shown).

The roof 1 comprises a frame 4 (shown schematically as a broken line in Figure 1) which is fixed to two side runners 5 defining the top ends of the sides 6 of the motor vehicle 3, to a front transverse portion 8 arranged above the windscreen 9 and to a rear transverse portion 10 arranged above the rear window (not shown).

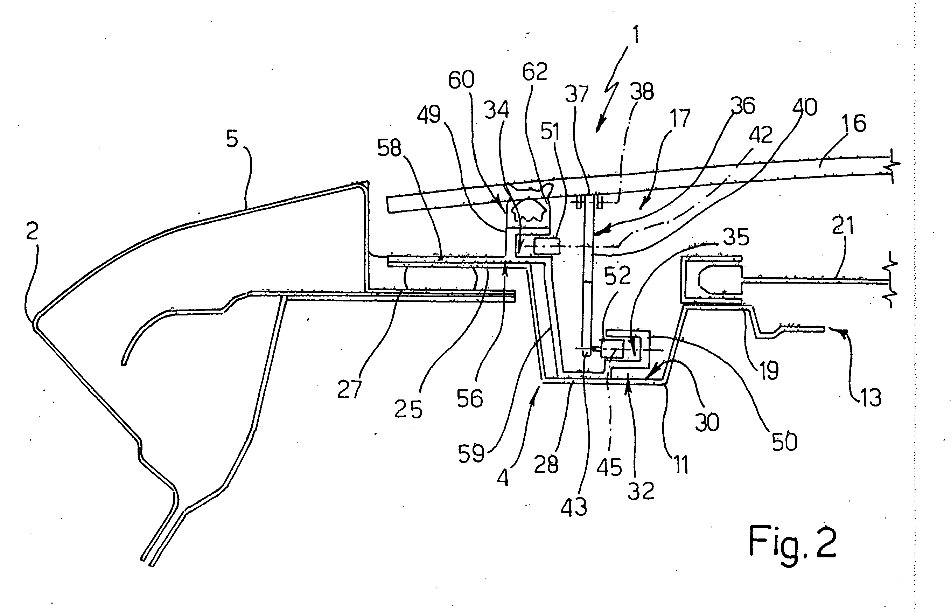

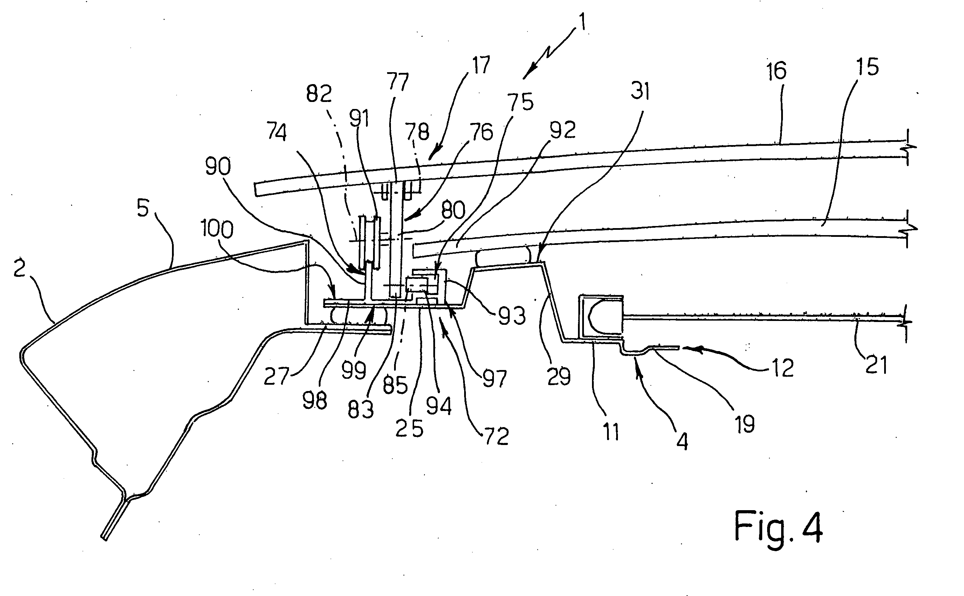

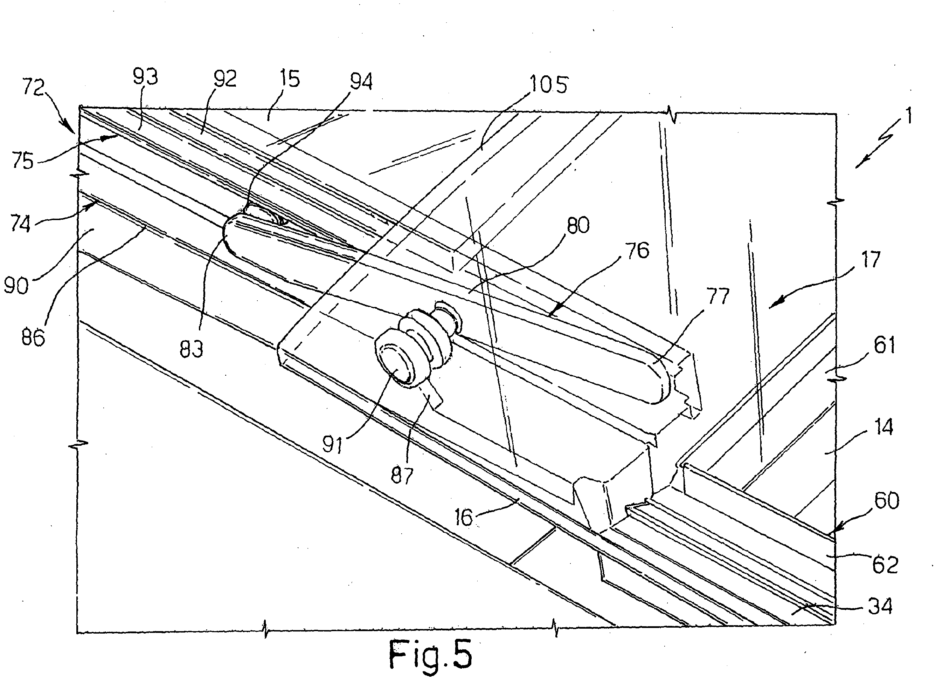

The frame 4 comprises an annular portion 11 and a middle cross member 14 (Fig. 5) and defines a rear opening 12 (Fig. 4) and a front opening 13 (Fig. 2). The openings 12 and 13 are covered by respective panels 15, 16 and by a roll-up sun shade 21 - not described in detail - which is arranged below the cross member 14 when it is extended.

The panel 15 is light-permeable, or transparent, and is connected in a fixed position and in a fluid-tight manner to the frame 4, preferably by means of bonding (see Figure 4). The opening 13, on the other hand, is arranged above the locations envisaged in the passenger compartment for the driver and the front passenger and may be opened/closed by operating the panel 16 in a manner not shown and not described in detail, for example by means of a motor-driven driving unit.

The panel 16 is light-permeable, or transparent, and is joined to the frame 4 by means of a device 17 which allows the panel 16 to move between an advanced position (Figure 2), where it is lowered and closes the opening 13, and a retracted position (Figures 1 and 4), where it is raised and leaves the opening 13 open. In the plan view of Figure 1, the panel 16 moves along the longitudinal axis 18 of forward movement of the motor vehicle 3.

With reference to Figures 2 and 4, the sides of the portion 11 terminate towards the inside with respective flanges 19 which support the shade 21 on top.

The sides of the portion 11 terminate towards the outside with respective flanges 25 which extend longitudinally along the profile defined by the runners 5; in the cross-section shown in Figure 2 they follow horizontal straight lines, extend above corresponding lugs 27 of the runners 5 and are bonded directly onto these lugs 27.

Each side of the portion 11 comprises, at the front, a longitudinal section 28 (Figure 2) and, at the rear, a longitudinal section 29 (Figure 4): the sections 28, 29 are substantially aligned with each other and are arranged on opposite sides of the cross member 14. The section 28 has a U-shaped cross-section, extends further downwards than the cross member 14 and defines a cavity 30; the section 29, instead, extends projecting upwards with respect to the cross member 14 and the flange 25, so as to define an upper surface 31 for bonding the panel 15.

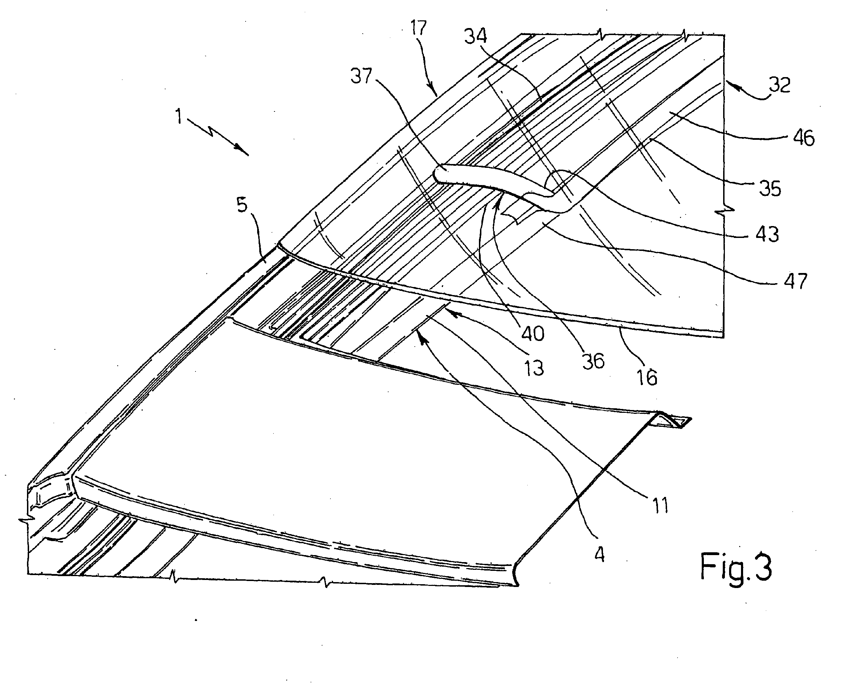

With reference to Figures 2 and 3, the device 17 comprises two pairs 32 of front guides, which are arranged, respectively, on the right and on the left of the opening 13. Each pair of guides 32 is mounted in a fixed position on the frame 4 and consists of an associated guide 34 and an associated guide 35.

The device 17 also comprises two front levers 36, the top and front ends 37 of which are hinged in a manner not shown in detail with the panel 16 about respective horizontal axes 38, which are perpendicular to the axis 18 and aligned with each other. The levers 36 comprise: respective middle portions 40 which are guided by the guides 34 and are rotatable with respect to the guides 34 about respective axes 42 parallel to the axes 38 and substantially aligned with each other; and respective bottom terminal portions 43, which are guided by the guides 35 and are rotatable with respect to the guides 35 about respective axes 45 parallel to the axes 42 and 38 and substantially aligned with each other.

The guides 35 are shaped with a profile such as to move the axes 45 vertically towards/away from the axes 42 and therefore rotate the front levers 36 when the panel 16 is near to its advanced position. With reference to Figure 3, the guides 34 follow the curved profile which the panel 16 has along the axis 18, while the guides 35 comprise respective rear sections 46 parallel to the guides 34 and respective front ramps 47 which extend vertically towards the guides 34.

The guides 34 are arranged in a lateral position situated further outwards than the guides 34; in particular, the guides 34 and 35 of each pair 32 are arranged on opposite sides of the associated lever 36.

The guides 34 and 35 of each pair 32 are arranged in a position such that the axes 42 are arranged higher than the axes 45.

The guides 34 and 35 of each pair 32 are defined by respective portions 49,50 in the form of a channel which have a C-shaped cross-section with the concavity directed towards the associated lever 36 and are engaged by rollers 51, 52 which are hinged with the portion 40 about the axis 42 and with the portion 43 about the axis 45, respectively.

For each pair 32 of guides, the portions 49, 50 form part of a single profiled longitudinal element 56 fixed on the corresponding side of the portion 11 of the frame 4. The element 56 comprises: a terminal flange 58, which is directed laterally towards the outside and has a bottom side resting on the flange 25 and an upper side carrying the guide 34; the portion 50, which is arranged laterally on the inside and is housed inside the cavity 30; and a middle wall 59, which has an L-shaped cross-section, rests on the bottom of the cavity 30 and joins together the bottom longitudinal edge of the portion 49 (which coincides with the inner longitudinal edge of the flange 58) and the bottom longitudinal edge of the portion 50.

The frame 4 has a sealing device 60 defined by an annular seal which is arranged around the opening 13, cooperates with the panel 16 so as to ensure fluid-tightness when the panel 16 is arranged in its advanced position and comprises: a rear transverse section 61 mounted on the cross member 14 (Figure 5); two longitudinal sections 62 arranged on opposite sides of the opening 13 (one of which is shown, for the sake of simplicity, in an un-deformed condition in Figure 2); and a front transverse section (not shown).

According to the invention, the sections 62 are mounted above the guides 34 or the guides 35. In particular, the sections 62 are fixed to the upper surface of the portions 49.

With reference to Figures 4 and 5, the device 17 also comprises two pairs 72 of rear guides, which are arranged, respectively, on the right and on the left of the opening 12 and are mounted in a fixed position on the frame 4. Each pair 72 of guides consists of an associated guide 74 and an associated guide 75.

The device 17 also comprises two rear levers 76, the top and front ends 77 of which are hinged with the panel 16 in a manner not shown in detail about respective axes 78 which are parallel to the axes 38 and aligned with each other. The levers 76 comprise: respective middle portions 80 which are guided by the guides 74 and are rotatable with respect to the guides 74 about respective axes 82 parallel to the axes 78 and substantially aligned with each other; and respective bottom terminal portions 83, which are guided by the guides 75 and are rotatable with respect to the guides 75 about respective axes 85 parallel to the axes 82 and 78 and substantially aligned with each other.

The guides 74 are shaped with a profile such as to move the axes 82 vertically towards/away from the axes 85 and therefore rotate the levers 76 when the panel 16 is near to its advanced position. With reference to Figure 5, the guides 75 follow the curved profile which the panel 15 has along the axis 18, while the guides 74 comprise respective rear sections 86 parallel to the guides 75 and respective front ramps 87 which extend vertically further away from the guides 75.

The guides 74 are defined by respective vertical ribs 90 on which respective rollers 91 hinged with the portions 80 travel. The guides 74 are arranged in a lateral position situated further outwards than the guides 75 and remain visible, while the guides 35 are covered by the ends 92 of the panel 15 which project laterally from the sections 29 above the flanges 25.

The guides 75 are defined by respective portions 93 which are formed as a channel with its concavity directed towards the respective levers 76 and are engaged by respective rollers 94 which are hinged on the portions 83 about the axes 85. For each pair 72 of guides, the portion 93 and the rib 90 are arranged on opposite sides of the associated lever 76 and are aligned horizontally with each other, but the axes 82 remain higher than the axes 85.

For each pair 72 of guides, the guides 74 and 75 are defined by a single profiled longitudinal body 97 which is fixed on the corresponding side of the portion 11 of the frame 4. The body 97 is arranged horizontally alongside the section 29 and comprises, viewed in cross-section, a flat wall 98 with a bottom side 99 resting on the flange 25, an upper side 100 which carries the rib 90 projecting upwards and a lateral longitudinal edge which is directed towards the inside and carries the portion 93 in a projecting manner.

When the panel 16 is arranged in the advanced position, the levers 76 are situated behind the cross member 14, and therefore the seal 60, and remain at least partly below a rear terminal portion 105 of the panel 16 (Figure 5). When the panel 16 is retracted, along a first section of the travel path, the rollers 91 travel up the ramps 87, while the rollers 52 travel down the ramps 47 so as to rotate the levers 36 and 76 about momentary axes of rotation (not shown) and therefore raise the panel 16. Along a second section of the travel path, the panel 16 travels along the guides and positions itself above the panel 15. Similarly, when the panel 16 is moved forwards, along the last section of the travel path, the rollers 91 travel down the ramps 87, while the rollers 52 travel up the ramps 47 so as to rotate the levers 36 and 76 and lower the panel 16 against the seal 60 and close the opening 13.

The fact that the sections 62 of the seal are arranged above the guides 34, and not in a position horizontally alongside, allows the dimensions of the frame 4 to be reduced in the horizontal direction perpendicular to the axis 18 and therefore the width of the opening 13 to be increased, the other structural and dimensional characteristics remaining unchanged.

The increase in this width is also due to the fact that the frame 4 is fixed directly to the lugs 27, without intermediate adjusting frames.

Also, owing to the location of the guides 34 and 35, in particular the location of the ramps 47, it is possible to have a frame 4 with smaller dimensions so as to increase the visibility through the opening 13 from inside the passenger compartment.

The device 17 is also extremely simple since the forms given to the levers 36,76 (which are substantially straight, with the axes 38, 42 and 45 substantially aligned with each other and the axes 78, 82 and 85, substantially aligned with each other, respectively) and the forms of the guides 34,35,74,75 do not give rise to constructional and assembly problems.

Moreover, owing to the particular structure and position of the guides 74, 75, it is possible to obtain a particular attractive aesthetic effect for the roof 1 as a whole.

From the above description, finally, it is clear that the roof 1 described with reference to the accompanying figures may be subject to modifications and variations which do not depart from the scope of protection of the present invention.

In particular, the guides 35 and the guides 75 could be arranged underneath the guides 34 and 74, respectively, instead of being arranged on the opposite side of the levers 36,76.

Moreover, the guides 34,35,74,75 could be defined by portions or channels with a form and/or dimensions different from those described and illustrated.

## Claims

1. Motor vehicle roof (1), the roof comprising:
- a frame (4) able to be joined in a fixed position to a body of the motor vehicle and defining at least one opening (13);
- a light-permeable panel (16);
- means for joining the said panel (16) to the said frame (4) so as to allow the said panel (16) to move longitudinally between an advanced position, where it is lowered and closes said opening (13), and a retracted position, where it is raised and leaves said opening (13) open; said joining means comprising:
a) a pair of front guides (32) on the right and a pair of front guides (32) on the left of the said opening (13); each pair of front guides (32) being mounted on the said frame (4) and consisting of an associated first guide and an associated second guide;
b) two front levers (36) hinged with the said panel (16) about respective first horizontal axes (38); said front levers (36) comprising:
(1) respective first portions (40) guided by the said first guides (34) and rotatable with respect to the said first guides (34) about respective second axes (42) parallel to the said first axes (38);
(2) respective second portions (43) guided by the said second guides (35) and rotatable with respect to the said second guides (35) about respective third axes (45) parallel to the said first and second axes (42);
said second guides (35) being shaped with a profile such as to raise/lower the said third axes (45) with respect to the said second axes (42) and, therefore, rotate the said front levers (36) when the said panel (16) is near to the said advanced position;
- sealing means (60) mounted on the said frame (4) around the said opening (13) and co-operating with the said panel (16) so as to ensure fluid-tightness when the said panel (16) is arranged in its advanced position and comprising two longitudinal sealing sections (62) arranged on opposite sides of the said opening (13) and mounted on, and arranged above, said first guides (34) or said second guides (35).

2. Roof according to Claim 1, **characterized in that** said longitudinal sealing sections (62) are mounted on, and arranged above, said first guides (34).

3. Roof according to Claim 1 or 2, **characterized in that** the said first guides (34) are arranged in a lateral position situated further outwards than the said second guides (35).

4. Roof according to any one of the preceding claims, **characterized in that** the said second axes (42) are arranged higher than the said third axes (45).

5. Roof according to any one of the preceding claims, **characterized in that** said first guides (34) and said second guides (35) are defined by respective portions in the form of a channel having a C-shaped cross-section with its concavity directed towards the said front levers (36).

6. Roof according to any one of the preceding claims, **characterized in that**, for each said pair of front guides (32), the said first guide and the said second guide are defined by a single longitudinal element (56) arranged above and fixed to the said frame (4).

7. Roof according to Claim 6, **characterized in that** said longitudinal element (56) comprises, viewed in cross-section:
- a terminal flange (58) directed laterally towards the outside and carrying the said first guide on an upper side thereof;
- a terminal portion (50) arranged laterally inside and defining the said second guide;
- an L-shaped middle wall (59) which joins together the said terminal flange (58) and the said terminal portion (50).

8. Roof according to Claim 7, **characterized in that** the said terminal portion (50) and the said middle portion are housed inside a U-shaped cavity of the said frame (4).

9. Roof according to any one of the preceding claims, **characterized in that** the said joining means comprise, moreover:
- a pair of right-hand rear guides and a pair of lefthand rear guides; each pair of rear guides (72) being mounted on the said frame (4) and consisting of an associated third guide (75) and an associated fourth guide (74);
- two rear levers (76) hinge with the said panel (16) about respective fourth axes (78) parallel to the said first axes (38); said rear levers (76) comprising:
a) respective third portions (83) guided by the said third guides (75) and rotatable with respect to the said third guides (75) about respective fifth axes (85) parallel to the said third axes (45);
b) respective fourth portions (80) guided by the said fourth guides (74) and rotatable with respect to the said fourth guides (74) about respective sixth axes (82) parallel to the said fourth and fifth axes;
said fourth guides (74) being shaped with a profile such as to raise/lower the said sixth axes (82) with respect to the said fifth axes (85) and, therefore, rotate the said rear levers (76) when the said panel (16) is near to the said advanced position.

10. Roof according to Claim 9, **characterized in that** said fourth guides (74) are defined by respective vertical ribs (90) on which respective rollers (91) hinged with the said fourth portions (80) travel.

11. Roof according to Claim 10, **characterized in that** the said fourth guides (74) are arranged in a lateral position situated further outwards than the said third guides (75).

12. Roof according to any one of Claims 9 to 11, **characterized in that** said fourth guides (74) remain visible.

13. Roof according to any one of Claims 9 to 12, **characterized in that** the said sixth axes (82) are arranged higher than the said fifth axes (85) .

14. Roof according to any one of Claims 9 to 13, **characterized in that** it comprises an additional panel (15), the lateral ends of which are arranged above the said third guides (75).

15. Roof according to Claim 14, **characterized in that** said additional panel (15) is light-permeable and is fixed to the said frame (4) by means of bonding.

16. Roof according to any one of Claims 9 to 15, **characterized in that**, for each said pair of rear guides, the said third guide (75) and the said fourth guide (74) are defined by a single longitudinal body (97) arranged above and fixed to the said frame (4).

17. Roof according to Claim 16, **characterized in that** said longitudinal body (97) comprises, viewed in cross-section, a flat wall (98) with a bottom side (99) resting on the said frame (4), an upper side (100) carrying the said fourth guide (74) projecting upwards, and a lateral end carrying the said third guide (75) projecting towards the inside of the roof.

18. Roof according to Claim 16 or 17, **characterized in that** said frame (4) comprises, viewed in cross-section, an upwardly raised portion (29) arranged alongside the said longitudinal body (97) inside the said roof and having, mounted thereon in a fixed position, an additional light-permeable panel.

19. Motor vehicle comprising a body and a roof made according to anyone of the preceding claims.

20. Motor vehicle according to Claim 19, **characterized in that** said frame (4) is fixed directly to the said body.

21. Motor vehicle according to Claim 20, **characterized in that** the said frame (4) is bonded directly onto said body.

## Patentansprüche

1. Kraftfahrzeugdach (1) umfassend:
- einen Rahmen (4), der mit einer Kraftfahrzeugkarosserie fest verbindbar ist und der mindestens eine Öffnung (1 3) definiert;
- eine lichtdurchlässige Scheibe (16);
- Mittel zum Verbinden der Scheibe (16) mit dem Rahmen (4) auf eine Weise, dass es möglich ist, die Scheibe (16) in Längsrichtung zwischen einer vorgeschobenen Position, in welcher sie gesenkt ist und die Öffnung (13) schließt, und einer zurückgezogenen Position, in welcher sie angehoben ist und die Öffnung (13) offen lässt, zu bewegen, das Verbindungsmittel umfassend:
a) ein Paar Vorderleitvorrichtungen (32) rechts und ein Paar Vorderleitvorrichtungen (32) links von der Öffnung (13); wobei die Paare Vorderleitvorrichtungen (32) jeweils am Rahmen (4) befestigt sind und aus einer ersten Leitvorrichtung und einer entsprechenden zweiten Leitvorrichtung bestehen;
b) zwei Vorderhebel (36), die mit der Scheibe (16) um ihre jeweiligen ersten horizontalen Achsen (38) drehbar verbunden sind; die Vorderhebel (36) umfassend:
(1) jeweilige erste Teile (40), die von den ersten Leitvorrichtungen (34) geführt werden und die im Verhältnis zu den ersten Leitvorrichtungen (34) um ihre jeweiligen zweiten Achsen (42) parallel zu den ersten Achsen (38) drehbar sind;
(2) jeweilige zweite Teile (43), die von den zweiten Leitvorrichtungen (35) geführt werden und die im Verhältnis zu den zweiten Leitvorrichtungen (35) um jeweilige dritte Achsen (45) parallel zu den ersten und zweiten Achsen (42) drehbar sind;
wobei die zweiten Leitvorrichtungen (35) mit einem Profil ausgebildet sind, so dass sie die dritten Achsen (45) im Verhältnis zu den zweiten Achsen (42) anheben/absenken können und dadurch die Vorderhebel (36) drehen können, wenn die Scheibe (16) der vorgeschobenen Position nahe ist;
- ein Abdichtmittel (60), das um die Öffnung (1 3) am Rahmen (4) befestigt ist und welches mit der Scheibe (16) zusammenarbeitet, um zu gewährleisten, dass die Öffnung fluiddicht bleibt, wenn die Scheibe (16) sich in der vorgeschobenen Position befindet und welches zwei sich in Längsrichtung erstreckende Dichtungsabschnitte (62) umfasst, die an gegenüberliegenden Seiten der Öffnung (13) angeordnet sind und die an sowie über den ersten Leitvorrichtungen (34) oder den zweiten Leitvorrichtungen (35) befestigt und angeordnet sind.

2. Dach nach Anspruch 1, **dadurch gekennzeichnet, dass** die sich in Längsrichtung erstreckenden Dichtungsabschnitte (62) an bzw. über den ersten Leitvorrichtungen (34) befestigt bzw. angeordnet sind.

3. Dach nach Anspruch 1 oder 2, **dadurch gekennzeichnet, dass** die ersten Leitvorrichtungen (34) an einer seitlichen Position angebracht sind, die sich weiter außerhalb befindet als die zweiten Leitvorrichtungen (35).

4. Dach nach einem der vorhergehenden Ansprüche, **dadurch gekennzeichnet, dass** die zweiten Achsen (42) höher angeordnet sind als die dritten Achsen (45).

5. Dach nach einem der vorhergehenden Ansprüche, **dadurch gekennzeichnet, dass** die ersten Leitvorrichtungen (34) und die zweiten Leitvorrichtungen (35) durch jeweilige Teile in Form eines Kanals mit einem C-förmigen Querschnitt definiert sind, dessen Höhlung auf die Vorderhebel (36) gerichtet ist.

6. Dach nach einem der vorhergehenden Ansprüche, **dadurch gekennzeichnet, dass** für jedes Paar von Vorderleitvorrichtungen (32) die erste Leitvorrichtung und die zweite Leitvorrichtung durch ein einzelnes sich in Längsrichtung erstreckendes Element (56), welches über dem Rahmen angeordnet sowie am Rahmen befestigt ist, definiert sind.

7. Dach nach Anspruch 6, **dadurch gekennzeichnet, dass** das sich in Längsrichtung erstreckende Element (56) umfasst, wenn es als Querschnitt betrachtet wird:
- einen Endflansch (58), der seitlich nach außen gerichtet ist und welcher die erste Leitvorrichtung auf einer oberen Seite davon trägt;
- einen Endteil (50), der innerhalb der zweiten Leitvorrichtung seitlich angeordnet ist und welcher diese definiert;
- eine L-förmige Mittelwand (59), die den Endflansch (58) und den Endteil (50) verbindet.

8. Dach nach Anspruch 7, **dadurch gekennzeichnet, dass** der Endteil (50) und der Mitteilteil in einer U-förmigen Aussparung des Rahmens (4) angebracht sind.

9. Dach nach einem der vorhergehenden Ansprüche, **dadurch gekennzeichnet, dass** die Verbindungsmittel zusätzlich umfassen:
- ein Paar rechtseitige Hinterleitvorrichtungen und ein Paar linksseitige Hinterleitvorrichtungen; wobei jedes Paar von Hinterleitvorrichtungen (72) am Rahmen befestigt ist und aus einer dritten Leitvorrichtung (75) und einer entsprechenden vierten Leitvorrichtung (74) besteht;
- zwei Hinterhebel (76), die mit der Scheibe (16) um jeweilige vierte Achsen (78) parallel zu den ersten Achsen (38) drehbar verbunden sind, wobei die Hinterhebel (76) umfassen:
a) jeweilige dritte Teile (83), die von den dritten Leitvorrichtungen (75) geführt werden und welche im Verhältnis zu den dritten Leitvorrichtungen (75) um jeweilige fünfte Achsen (85) parallel zu den dritten Achsen (45) drehbar sind;
b) jeweilige vierte Teile (80), die von den vierten Leitvorrichtungen (74) geführt werden und welche im Verhältnis zu den vierten Leitvorrichtungen (74) um jeweilige sechste Achsen (82) parallel zu den vierten und fünften Achsen drehbar sind;
wobei die vierten Leitvorrichtungen (74) mit einem Profil ausgebildet sind, so dass sie die sechsten Achsen (82) im Verhältnis zu den fünften Achsen (85) anheben/absenken und dadurch die Hinterhebel (76) drehen können, wenn die Scheibe (16) der vorgeschobenen Position nahe ist.

10. Dach nach Anspruch 9, **dadurch gekennzeichnet, dass** die vierten Leitvorrichtungen (74) durch jeweilige vertikale Rippen (90) definiert sind, auf welchen sich jeweilige Rollen (91) bewegen, die mit den vierten Teilen (80) drehbar verbunden sind.

11. Dach nach Anspruch 10, **dadurch gekennzeichnet, dass** die vierten Leitvorrichtungen (74) an einer seitlichen Position angebracht sind, die sich weiter außerhalb befindet als die dritten Leitvorrichtungen.

12. Dach nach einem der vorhergehenden Ansprüche 9 bis 11, **dadurch gekennzeichnet, dass** die vierten Leitvorrichtungen (74) sichtbar bleiben.

13. Dach nach einem der Ansprüche 9 bis 12, **dadurch gekennzeichnet, dass** die sechsten Achsen (82) höher angeordnet sind als die fünften Achsen (85).

14. Dach nach einem der Ansprüche 9 bis 13, **dadurch gekennzeichnet, dass** es eine zusätzliche Scheibe (15) umfasst, deren seitliche Enden oberhalb der dritten Leitvorrichtungen (75) angeordnet sind.

15. Dach nach Anspruch 14, **dadurch gekennzeichnet, dass** die zusätzliche Scheibe (1 5) lichtdurchlässig ist und am Rahmen (4) durch Bonden befestigt ist.

16. Dach nach einem der Ansprüche 9 bis 15, **dadurch gekennzeichnet, dass** für jedes Paar Hinterleitvorrichtungen die dritte Leitvorrichtung (75) und die vierte Leitvorrichtung (74) durch einen einzelnen sich in Längsrichtung erstreckenden Körper (97) definiert sind, der oberhalb des Rahmens (4) angeordnet und am Rahmen (4) befestigt ist.

17. Dach nach Anspruch 16, **dadurch gekennzeichnet, dass** der sich in Längsrichtung erstreckende Körper (97) umfasst, wenn er als Querschnitt betrachtet wird, eine flache Wand (98) mit einer auf dem Rahmen (4) ruhenden unteren Seite (99), einer nach oben ragenden oberen Seite (100), welche die vierte Leitvorrichtung (74) trägt, und ein seitliches Endstück, welches die dritte Leitvorrichtung (75) trägt und welches in Richtung der Innenseite des Daches ragt.

18. Dach nach Anspruch 16 oder 17, **dadurch gekennzeichnet, dass** der Rahmen (4) umfasst, wenn er als Querschnitt betrachtet wird, einen nach oben angehobenen Teil (29), welcher neben dem sich in Längsrichtung erstreckenden Körper (97) innerhalb des Daches angeordnet ist, und welcher eine zusätzliche lichtdurchlässige Scheibe hat, die darauf fest angebracht ist.

19. Kraftfahrzeug, umfassend eine Karosserie und ein Dach, welches nach einem der vorhergehenden Ansprüche hergestellt ist.

20. Kraftfahrzeug nach Anspruch 19, **dadurch gekennzeichnet, dass** der Rahmen (4) mit der Karosserie direkt verbunden ist.

21. Kraftfahrzeug nach Anspruch 20, **dadurch gekennzeichnet, dass** der Rahmen (4) direkt an die Karosserie gebondet ist.

## Revendications

1. Toit de véhicule à moteur (1), le toit comprenant :
- un cadre (4) pouvant être assemblé, dans une position fixe, à une carrosserie du véhicule à moteur et définissant au moins une ouverture (13);
- un panneau perméable à la lumière (16) ;
- des moyens pour assembler ledit panneau (16) audit cadre (4) de façon à permettre audit panneau (16) de se déplacer longitudinalement entre une position avancée, à laquelle il est abaissé et ferme ladite ouverture (13), et une position rétractée, à laquelle il est soulevé et laisse ladite ouverture (13) ouverte ; lesdits moyens d'assemblage comprenant :
a) une paire de guides avant (32) sur la droite et une paire de guides avant (32) sur la gauche de ladite ouverture (13) ; chaque paire de guides avant (32) étant montée sur ledit cadre (4) et étant constituée d'un premier guide associé et d'un deuxième guide associé ;
b) deux leviers avant (36) articulés audit panneau (16) autour de premiers axes horizontaux (38) respectifs ; lesdits leviers avant (36) comprenant :
(1) des premières parties (40) respectives guidées par lesdits premiers guides (34) et pouvant tourner par rapport auxdits premiers guides (34) autour de deuxièmes axes (42) respectifs, parallèles auxdits premiers axes (38) ;
(2) des deuxièmes parties (43) respectives guidées par lesdits deuxièmes guides (35) et pouvant tourner par rapport auxdits deuxièmes guides (35) autour de troisièmes axes (45) respectifs, parallèles auxdits premiers et deuxièmes axes (42) ;
lesdits deuxièmes guides (35) étant façonnés selon un profil leur permettant de soulever/abaisser lesdits troisièmes axes (45) par rapport auxdits deuxièmes axes (42), et donc de faire tourner lesdits leviers avant (36) lorsque ledit panneau (16) est proche de ladite position avancée ;
- des moyens d'étanchéité (60) montés sur ledit cadre (4) autour de ladite ouverture (13) et coopérant avec ledit panneau (16) de façon à garantir une étanchéité aux fluides lorsque ledit panneau (16) est placé dans sa position avancée, et comprenant deux sections d'étanchéité longitudinales (62) disposées de chaque côté de ladite ouverture (13) et montées sur lesdits premiers guides (34) ou lesdits deuxièmes guides (35), en étant disposées au-dessus de ceux-ci.

2. Toit selon la revendication 1, **caractérisé en ce que** lesdites sections d'étanchéité longitudinales (62) sont montées sur lesdits premiers guides (34), en étant disposées au-dessus de ceux-ci.

3. Toit selon la revendication 1 ou 2, **caractérisé en ce que** lesdits premiers guides (34) sont disposés dans une position latérale située davantage vers l'extérieur que lesdits deuxièmes guides (35).

4. Toit selon l'une quelconque des revendications précédentes, **caractérisé en ce que** lesdits deuxièmes axes (42) sont situés plus haut que lesdits troisième axes (45).

5. Toit selon l'une quelconque des revendications précédentes, **caractérisé en ce que** lesdits premiers guides (34) et lesdits deuxièmes guides (35) sont définis par des parties respectives sous la forme d'un canal à section droite en C, dont la concavité est dirigée vers lesdits leviers avant (36).

6. Toit selon l'une quelconque des revendications précédentes, **caractérisé en ce que**, pour chacune desdites paires de guides avant (32), ledit premier guide et ledit deuxième guide sont définis par un seul élément longitudinal (56) disposé au-dessus dudit cadre (4) et fixé à celui-ci.

7. Toit selon la revendication 6, **caractérisé en ce que** ledit élément longitudinal (56) comprend, vu en coupe transversale :
- une bride terminale (58) dirigée latéralement vers l'extérieur et portant ledit premier guide sur son côté supérieur ;
- une partie terminale (50) disposée latéralement à l'intérieur et définissant ledit deuxième guide ;
- une paroi centrale en L (59) qui réunit ensemble ladite bride terminale (58) et ladite partie terminale (50).

8. Toit selon la revendication 7, **caractérisé en ce que** ladite partie terminale (50) et ladite partie centrale sont logées à l'intérieur d'une cavité en U dudit cadre (4).

9. Toit selon l'une quelconque des revendications précédentes, **caractérisé en ce que** lesdits moyens d'assemblage comprennent, en outre :
- une paire de guides arrière droit et une paire de guides arrière gauche ; chaque paire de guides arrière (72) étant montée sur ledit cadre (4) et étant constituée d'un troisième guide associé (75) et d'un quatrième guide associé (74) ;
- deux leviers arrière (76) articulés audit panneau (16) autour de quatrièmes axes (78) respectifs, parallèles auxdits premiers axes (38) ; lesdits leviers arrière (76) comprenant :
a) des troisièmes parties (83) respectives guidées par lesdits troisièmes guides (75) et pouvant tourner par rapport auxdits troisièmes guides (75) autour de cinquièmes axes (85) respectifs, parallèles auxdits troisièmes axes (45) ;
b) des quatrièmes parties (80) respectives guidées par lesdits quatrièmes guides (74) et pouvant tourner par rapport auxdits quatrièmes guides (74) autour de sixièmes axes (82) respectifs, parallèles auxdits quatrièmes et cinquièmes axes ; lesdits quatrièmes guides (74) étant façonnés selon un profil leur permettant de soulever/abaisser lesdits sixièmes axes (82) par rapport auxdits cinquièmes axes (85), et donc de faire tourner lesdits leviers arrière (76) lorsque ledit panneau (16) est proche de ladite position avancée.

10. Toit selon la revendication 9, **caractérisé en ce que** lesdits quatrièmes guides (74) sont définis par des nervures verticales (90) respectives sur lesquelles se déplacent des galets (91) respectifs, articulés auxdites quatrièmes parties (80).

11. Toit selon la revendication 10, **caractérisé en ce que** lesdits quatrièmes guides (74) sont disposés dans une position latérale située davantage vers l'extérieur que lesdits troisièmes guides (75).

12. Toit selon l'une quelconque des revendications 9 à 11, **caractérisé en ce que** lesdits quatrièmes guides (74) restent visibles.

13. Toit selon l'une quelconque des revendications 9 à 12, **caractérisé en ce que** lesdits sixièmes axes (82) sont disposés plus haut que lesdits cinquièmes axes (85).

14. Toit selon l'une quelconque des revendications 9 à 13, **caractérisé en ce qu'**il comprend un panneau additionnel (15), dont les extrémités latérales sont disposées au-dessus desdits troisièmes guides (75).

15. Toit selon la revendication 14, **caractérisé en ce que** ledit panneau additionnel (15) est perméable à la lumière et est fixé audit cadre (4) par collage.

16. Toit selon l'une quelconque des revendications 9 à 15, **caractérisé en ce que**, pour chacune desdites paires de guides arrière, ledit troisième guide (75) et ledit quatrième guide (74) sont définis par un seul corps longitudinal (97) disposé au-dessus dudit cadre (4) et fixé à celui-ci.

17. Toit selon la revendication 16, **caractérisé en ce que** ledit corps longitudinal (97) comprend, vu en coupe transversale, une paroi plane (98) ayant un côté inférieur (99) reposant sur ledit cadre (4), un côté supérieur (100) portant ledit quatrième guide (74) faisant saillie vers le haut, et une extrémité latérale portant ledit troisième guide (75) faisant saillie vers l'intérieur du toit.

18. Toit selon la revendication 16 ou 17, **caractérisé en ce que** ledit cadre (4) comprend, vu en coupe transversale, une partie remontant vers le haut (29) disposée le long dudit corps longitudinal (97) à l'intérieur dudit toit et sur lequel est monté, dans une position fixe, un panneau perméable à la lumière additionnel.

19. Véhicule à moteur comprenant une carrosserie et un toit réalisé selon l'une quelconque des revendications précédentes.

20. Véhicule à moteur selon la revendication 19, **caractérisé en ce que** ledit cadre (4) est fixé directement sur ladite carrosserie.

21. Véhicule à moteur selon la revendication 20, **caractérisé en ce que** ledit cadre (4) est collé directement sur ladite carrosserie.
